# EUROPÄISCHE PATENTANMELDUNG

(11) **EP 0 822 126 A2**
(43) Veröffentlichungstag der Anmeldung: **04.02.1998**
(21) Anmeldenummer: 97112488.8
(22) Anmeldetag: 22.07.1997
(51) Int. Cl.: B60R 21/26

(54) **Gasgenerator für einen Airbag, Verfahren zur Herstellung desselben**

(30) Priorität: 01.08.1996 DE 19631006
(71) Anmelder: Progress-Werk Oberkirch Aktiengesellschaft, 77704 Oberkirch (DE)
(72) Erfinder: Obrecht, Johannes, 77704 Oberkirch (DE)
(74) Vertreter: Weller, Wolfgang, Dr.rer.nat.

(57) **Zusammenfassung**

Ein Gasgenerator (10) für einen Airbag weist einen Gasbehälter (20) zur Aufnahme eines unter hohem Druck stehenden Gases (21) auf. Der Gasbehälter (20) weist im Bereich einer Gasaustrittsöffnung eine Ringfläche (32) auf, an der ein Verschlußdeckel (70) anschweißbar ist. Die Wand (22) des Gasbehälters (20) weist zumindest eine Einbuchtung auf, über die der Gasbehälter (20) formschlüssig und unverlierbar mit einem weiteren Bauteil (80) verbindbar ist. Zur Vereinfachung der Fertigung und zur Erhöhung des Sicherheitsaspektes wird vorgeschlagen, die Ringfläche (32) durch die Innenseite eines über zumindest einen Umformvorgang, ohne spanabhebende Bearbeitung umgebogenen Abschnittes der Wand (22) des Gasbehälters (20) auszubilden.

## Beschreibung

Die Erfindung betrifft einen Gasgenerator für einen Airbag, mit einem Gasbehälter zur Aufnahme eines unter hohem Druck stehenden Gases, wobei der Gasbehälter im Bereich einer Gasaustrittsöffnung eine Ringfläche aufweist, an der ein Verschlußdeckel anschweißbar ist, und wobei der Gasbehälter formschlüssig und unverlierbar mit einem weiteren Bauteil verbindbar ist.

Die Erfindung betrifft ferner ein Verfahren zum Herstellen eines einen Gasbehälter aufweisenden Gasgenerators für einen Airbag, wobei am Gasbehälter im Bereich der Gasaustrittsöffnung eine Ringfläche ausgebildet wird, an der ein Verschlußdeckel anschweißbar ist, und wobei der Gasbehälter formschlüssig und unverlierbar mit einem weiteren Bauteil des Gasgenerators verbindbar ist.

Airbags haben in der Automobilindustrie einen verbreiteten Einsatz gefunden.

Bei der ersten Generation der Airbags wurde das Gas zum Aufblähen des Airbags über eine chemische Reaktion erzeugt. Nachteilig daran ist, daß bei der chemischen Reaktion sehr heiße Gase entstehen, die beim Menschen Schädigungen hervorrufen können, insbesondere auch deswegen, da diese Gase noch mit zahlreichen unverbrannten Partikeln belastet waren.

In einer Weiterentwicklung der Airbagtechnologie wurden Gasgeneratoren geschaffen, bei denen das Gas, das den Airbag aufbläht, ein unter hohem Druck stehendes komprimiertes Gas ist, meist ein Edelgas, wie bspw. Argon. Dazu weist der Gasgenerator einen Gasbehälter auf, in dem das Gas unter extrem hohem Druck, meist etwa 200 bis 300 bar, aufgenommen ist. Im Gegensatz zu der eingangs erwähnten Technologie liegen keine heißen Gase mehr vor, so daß ein Behälter, der das komprimierte Gas beinhaltet, als "Kaltgasbehälter" bezeichnet wird. Da sich ein Airbag im Millisekundenbereich aufblähen muß, ist es notwendig, daß das im Kaltgasbehälter komprimierte Gas in diesem kurzen Zeitraum aus dem Kaltgasbehälter austritt und in den Airbag überströmt. Da bei einer raschen Expansion eines unter hohem Druck stehenden Gases dieses sich entsprechend den Gesetzen der Thermodynamik sehr stark abkühlt, eine solche Expansion ist ein adiabatischer Vorgang, muß dafür Sorge getragen werden, daß die Gasaustrittsöffnung am Kaltgasbehälter nicht vereist, wodurch möglicherweise der Durchtrittquerschnitt der Gasaustrittsöffnung verringert oder gar verstopft würde.

Bei dem eingangs genannten Stand der Technik ist dazu vorgesehen, daß der Gasbehälter eine relativ große Gasaustrittsöffnung aufweist, die über einen Verschlußdeckel, nach Befüllen des Gasbehälters mit dem Gas, dadurch verschlossen wird, daß dieser Verschlußdeckel aufgeschweißt wird. Dazu weist der Gasbehälter im Bereich der Gasaustrittsöffnung eine Ringfläche auf, die mit einer entsprechenden Ringfläche des Verschlußdeckels verschweißt wird. Der Verschlußdeckel weist eine Membran auf, die aufgrund des hohen Druckes im Innern des Behälters etwas nach außen wölbt. Auf den Gasbehälter wird als weiteres Bauteil ein Filterrohr mit einem Brennsatz befestigt, wobei der Brennsatz dafür sorgt, die Membran durchzubrennen, so daß sich dann der Gasinhalt des Gasbehälters schlagartig entleeren kann. Das Filterrohr sorgt dafür, daß die, allerdings nur noch sehr geringen, Brennsatzrückstände ausgefiltert werden.

Da Airbags einen immer verbreiterten Einsatz finden, ursprünglich wurden nur auf der Fahrerseite Airbags eingesetzt, zwischenzeitlich werden Fahrzeuge nicht nur auf der Beifahrerseite sondern auch im Seitenbereich mit Airbags ausgestattet, besteht ein Bedarf daran, die Gasgeneratoren solcher Airbags konstruktiv einfach, somit ökonomisch und großtechnisch herstellen zu können, dabei aber gleichzeitig den hohen Sicherheitstandard beizubehalten.

Der hohe Sicherheitstandard beruht zum einen darauf, daß der unter dem hohen Druck von 200 bis 300 Atmosphären stehende Gasbehälter, der z.B. direkt vor dem Fahrer im Pralltopf des Lenkrades aufgenommen ist, ein hohes Sicherheitsrisiko darstellt. Dazu ist nicht nur der Gasbehälter aus entsprechenden druckfesten metallischen Materialien herzustellen, sondern insbesondere die Schweißverbindung zwischen dem Gasbehälter und dem Verschlußdeckel muß den hohen Sicherheitsansprüchen genüge tun. Dieser Sicherheitstandard muß auch über eine lange Zeit, z. Zt. bestehen Vorschriften über 10 bis 15 Jahre, erhalten bleiben.

Bei dem eingangs genannten Gasgenerator bzw. bei dem eingangs genannten Verfahren zum Herstellen eines solchen Generators wird so verfahren, daß zunächst ein Rohling hergestellt wird, der einen im wesentlichen hohlzylindrischen Körper aufweist, und dessen eines Ende über einen etwa halbkugelförmigen Boden verschlossen ist.

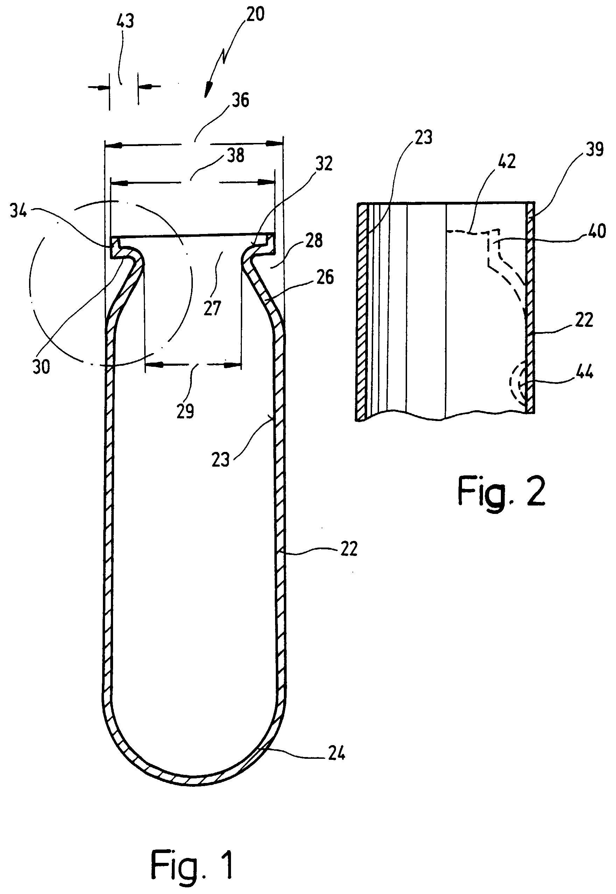

Das offene zylindrische Ende wird nun so bearbeitet, daß durch einen formbearbeitenden Vorgang ein durchmessergeringerer zylindrischer Hals ausgebildet wird, wie das in der beiliegenden Fig. 2 durch die strichpunktierte Linie und die Bezugsziffer 40 angedeutet ist. Bei diesem Umformvorgang entsteht am äußeren Ende des Halses 40 eine wellenlinienförmige Ringfläche 42, was darauf beruht, daß beim Einziehen des Halses, aufgrund von Anisotropien der metallischen Struktur unterschiedliches Fließverhalten vorliegt. Da an diese Ringfläche 42 des Halses 40 anschließend der Verschlußdeckel angeschweißt wird, muß über einen spanabhebenden Vorgang, bspw. durch ein Abdrehen oder Abschleifen die wellige Ringfläche 42 eingeebnet werden.

Nachteilig an dieser Vorgehensweise ist, daß dieser Vorgang technisch äußerst aufwendig ist, dazu müssen an das Werkstück nacheinander zwei unterschiedliche Werkzeuge herangebracht werden. Es müssen ja unterschiedlich geartete Bearbeitungsvorgänge durchgeführt werden, nämlich einmal der Umformvorgang und daran anschließend der spanabhebende Vorgang.

Weiterhin nachteilig ist, daß nur eine relativ schmale Ringfläche, nämlich die äußere Stirnfläche des Halses 40 zum Verschweißen zur Verfügung steht, deren Breite also letztendlich durch die Wandstärke des Gasbehälters vorgegeben wird. Um diese Anschweißfläche zu vergrößern, ist bspw. bekannt geworden, bei dem spanabhebenden Vorgang diese Ringfläche nicht als Radialebene fein zu bearbeiten, sondern als konische oder gestufte Ringfäche, was äußerst aufwendig ist.

Ein weiterer Nachteil besteht darin, daß ein solcher Gasbehälter erst nach dem Befüllen und nach dem Verschweißen mit dem Verschlußdeckel mit einer oberflächlichen, meist galvanisch aufgebrachten Korrosionsschutzschicht versehen werden kann, da eine vorher aufgebrachte Schicht durch die spanabhebende Bearbeitung zumindest teilweise wieder entfernt wird, so daß dann in diesem Bereich korrosionsanfällige Stellen vorhanden sind. Ein oberflächliches Überziehen eines Gasbehälters, in dessen Innern ein Druck von etwa 200 bis 300 bar besteht, stellt ebenfalls ein verfahrenstechnisches Risiko dar, wenn bspw. ein solcher Behälter, der in einem galvanischen Bad eingetaucht ist, explodiert, besteht eine erhebliche Beschädigungsgefahr für die galvanische Vorrichtung und eine erhebliche Verletzungsgefahr für die Arbeitspersonen.

Bei dem eingangs erwähnten Stand der Technik ist ferner vorgesehen, am Körper des Gasbehälters Einbuchtungen vorzusehen, wie das bspw. in der beiliegenden Fig. 2 durch die Einbuchtung 44 angedeutet ist. Dies dient dazu, um das eingangs erwähnte Filterrohr/Brennsatz dadurch an dem bereits gefüllten Gasbehälter zu befestigen, daß ein zylindrischer Abschnitt des Filterrohres über den Gasbehälter geschoben wird und dann dieser Abschnitt in die Einbuchtung 44 eingedrückt bzw. gebördelt wird. Beim eingangs genannten Stand der Technik sind die Einbuchtungen 44 abseits vom Flaschenhals liegend eingebracht worden.

Es ist Aufgabe der vorliegenden Erfindung, das vorgenannte Prinzip, also das Füllen des Gasbehälters mit einem unter hohem Druck stehenden Gas, anschließenden Verschweißen mit einem Verschlußdeckel und Vorsehen von Maßnahmen zum Verbinden mit weiteren Bauelementen, beizubehalten, dennoch die zuvor erwähnten Nachteile der aufwendigen Herstellungsweise zu beseitigen, um eine einfache, gleichzeitig sichere großtechnische Fertigungsweise zu ermöglichen.

Erfindungsgemäß wird die Aufgabe bei einem Gasgenerator dadurch gelöst, daß die Ringfläche durch die Innenseite eines über zumindest einen Umformvorgang, ohne spanabhebende Bearbeitung, umgebogenen Abschnitts der Wand des Behälters gebildet wird.

Bei einem Verfahren wird die Aufgabe dadurch gelöst, daß ein Abschnitt der Wand des Gasbehälters durch zumindest einen Umformungsvorgang, ohne spanabhebende Bearbeitung, umgebogen wird, und daß dadurch die Ringfläche ausgebildet wird.

Diese Maßnahmen haben nun den entscheidenden Vorteil, daß durch das Umbiegen eines Abschnittes der Wand durch einen oder mehrere Umformvorgänge unter Einsatz des entsprechenden Werkzeuges eine ganz bestimmt ausgeformte Ringfläche erzielt werden kann, die nicht mehr nachbearbeitet werden muß. Beim Umbiegen einer Wand des Gasbehälters, sei es nach innen oder nach außen, finden keine solchen Materialflüsse statt, daß die umgebogenen flächigen Bereiche aufgrund von Anisotropien zur Wellenbildung neigen, dies erfolgt nur an der äußeren Stirrikante. Darüber hinaus besteht der erhebliche Vorteil darin, daß durch die Auswahl der Länge des Abschnittes eine Ringflächenbreite nach Wunsch erzielt werden kann, diese also nicht mehr, wie beim eingangs erwähnten Stand der Technik, im wesentlichen von der Materialdicke der Behälterwand vorgegeben wird. Dadurch wird nicht nur verfahrenstechnisch wesentlich einfacher die zum Verschweißen mit dem Verschlußdeckel vorgesehene Ringfläche in hervorragender gewünschter Flächenqualität herstellbar, sondern es kann eine letztendlich nach Wunsch breite Ringfläche bereitgestellt werden, so daß eine große Verschweißfläche mit dem Verschlußdeckel zur Verfügung steht, was dem Sicherheitsaspekt erheblich zuträglich ist. Ein weiterer erheblicher Vorteil ist, da nur Umformvorgänge und keine spanabhebenden Vorgänge erfolgen, daß der Gasbehälter schon vor dem Befüllen mit der oberflächlichen Korrosionsschutzschicht versehen werden kann, die, durch Auswahl entsprechend fließfähiger Materialien, bei Umformvorgängen in keinster Weise beeinträchtigt oder verletzt wird. Somit entfällt das Risiko, daß bei einem oberflächlichen Korrosionsschutzbeschichten eines bereits unter Druck stehenden gefüllten Gasbehälters bei Explosionen Beeinträchtigungen von Gegenständen und Personen überhaupt stattfinden. Somit wird nicht nur dem Erfordernis der einfachen Formgebung sondern auch dem Sicherheitsaspekt Rechnung getragen, somit wird die Aufgabe vollkommen gelöst.

In einer Ausgestaltung der Erfindung ist die Ringfläche als eine Seite eines die Gasaustrittsöffnung umrundenden radialen Flansches ausgebildet.

Diese Maßnahme hat den Vorteil, daß durch einen sehr einfachen Umformungsvorgang, nämlich durch ein einfaches Umbiegen eines Abschnittes des Gasbehälters, ein radialer Flansch ausgebildet wird, dessen eine Ringfläche zum Anschweißen des Verschlußdeckels dient. Gleichzeitig kann die Hinterschneidung dieses Flansches als eine Einbuchtung dienen, um daran das weitere Bauteil, bspw. das Filterrohr mit dem Brennkammersatz durch ein Umbördeln zu befestigen.

In einer weiteren Ausgestaltung der Erfindung liegt die radiale Außenkontur des Behälters im Bereich der Ringfläche radial weiter innen als die Außenkontur des verbleibenden Behälterkörpers.

Diese Maßnahme hat nun den Vorteil, daß trotz des Umformungsvorganges unter Ausbildung der Ringfläche die Außenkontur des Behälters nicht überschritten sondern unterschritten wird, so daß anschließend einfach das Filterrohr über diesen Bereich übergeschoben werden kann, um dann am Gasbehälter unverlierbar befestigt zu werden, ohne die Baubreite des Gasbehälters zu überschreiten.

In einer weiteren Ausgestaltung der Erfindung ist, in Ausströmrichtung des Gases gesehen, hinter der Ringfläche unmittelbar anschließend eine Einbuchtung vorgesehen.

Diese Maßnahme hat nun den Vorteil, daß, sei es als Hinterschneidung des zuvor erwähnten Flansches, sei es als zusätzliche Einbuchtung in der Wand des Gasbehälters, letztere zugleich beim Umformen hergestellt wird. So kann entweder dasselbe oder Teile des Werkzeuges, das zum Umbiegen des Abschnittes zur Ausbildung der Ringfläche herangezogen wird, auch zugleich zur Ausbildung der Einbuchtung herangezogen werden, so daß nicht mehrere Werkzeuge nacheinander an den Gasbehälter herangeführt und entsprechend gesteuert werden müssen.

In einer weiteren Ausgestaltung der Erfindung weist der Gasbehälter eine zylindrische Wand auf, die im Bereich der Gasaustrittsöffnung eine kegelstumpförmige Einbuchtung aufweist, wobei am durchmessergeringeren Ende des Kegelstumpfabschnittes der radiale Flansch vorhanden ist, dessen eine äußere Ringfläche zum Anschweißen des Verschlußdeckels dient.

Diese konstruktive Ausgestaltung hat den erheblichen Vorteil, daß die eine äußere Ringfläche des Flansches zum Anschweißen des Verschlußdeckels dient, die gegenüberliegende Seite eine Hinterschneidung darstellt, um die das weitere Bauteil gebördelt werden kann, das mit dem Gasbehälter unverlierbar verbunden werden soll. Die konische Einbuchtung eröffnet nicht nur die Möglichkeit, dieses Einbördeln nach innen gerichtet durchzuführen, sondern durch Anlegen von Abschnitten des überstülpten Rohres an den konischen Abschnitt kann dieses besonders gut zentriert sitzend und unverlierbar bleibend an die Außenseite des Gasbehälters angebracht werden.

In einer weiteren Ausgestaltung der Erfindung ist ein die Ringfläche umrundender, sich in Ausströmrichtung des Gases forterstreckender axialer Ringabschnitt vorgesehen.

Diese Maßnahme hat nun den erheblichen Vorteil, daß dieser axiale Abschnitt als zusätzliche Zentrier- und Anlagefläche für das über die Außenseite überzuschiebende Filterrohr und dessen ringförmige Innenseite zugleich auch als Anlagefläche für den Verschlußdeckel dienen kann. Diese doppelte Zentrierung trägt auch erheblich zum Sicherheitsaspekt bei, d.h. einem gleichmäßigen schlagartigen Öffenen der vom Verschlußdeckel getragenen gewölbten Membran durch den Brennsatz und zentrierten Halten des Filterrohres, so daß die austretenden Gase symmetrisch verteilt aus- und in den Airbag abströmen können.

In einer weiteren Ausgestaltung ist der Außendurchmesser des axialen Ringabschnittes geringer als der Außendurchmesser des Gasbehälters.

Diese Maßnahme hat den Vorteil, daß nach Aufschieben des Filterrohres und Anbördeln ein kompakter zylindrischer Gasgenerator resultiert, dessen Außendurchmesser sowohl im Gasbehälterbereich als auch im Filterrohrbereich etwa gleich ist, wodurch dann dieser in entsprechende Öffnungen einfach einschiebbar ist.

In einer weiteren Ausgestaltung der Erfindung werden die kegelstumpfförmige Einbuchtung, der radiale Flansch mit der Ringfläche und der axiale Ringabschnitt gemeinsam ausgeformt.

Diese Maßnahme ist verfahrenstechnisch sehr ökonomisch und kann nun vorteilhafterweise über einen einzigen oder über mehrere Schritte erfolgen, wobei insbesondere bei relativ großen Behältern dem Material bei mehrstufigen Umformvorgängen genügend Zeit zum Entspannen zur Verfügung steht, was dann wieder dem Sicherheitsaspekt beiträglich ist, da dann die Metallstruktur des kalt umgeformten Materials eine solche Festigkeit beibehält, daß die hohen Drücke auf Dauer ertragen werden können.

Verfahrensmäßig ist bevorzugt, die Umformung über einen einziehenden Rolliervorgang durchzuführen, wobei im Innern des Behälters ein entsprechend geformter Dorn aufgenommen ist.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Die Erfindung wird nachfolgend anhand eines ausgewählten Ausführungsbeispiels näher beschrieben und erläutert. Es zeigen:
- Fig. 1: einen Längsschnitt eines Gasbehälters eines erfindungsgemäßen Gasgenerators, bevor dieser mit einem Verschlußdeckel verschweißt wird,
- Fig. 2: einen der Fig. 1 entsprechenden Schnitt im Bereich der Öffnung des Behälters, und zwar eines Rohlinges vor einem Umformungsvorgang, wobei in unterbrochenen Linien die eingangs erwähnten Umformungsvorgänge nach dem Stand der Technik angedeutet sind,
- Fig. 3: einen stark vergrößerten Ausschnitt des in Fig. 1 umkreisten Bereiches während eines Umformungsvorganges, und
- Fig. 4: einen endfertigen erfindungsgemäßen Gasgenerator.

Ein in Fig. 1 dargestellter Gasbehälter 20 weist eine hohlzylindrische Wand 22 auf, die über einen etwa halbkugelförmigen Boden 24 verschlossen ist. An dem dem Boden 24 gegenüberliegenden Ende geht die zylindrische Wand 22 in einen kegelstumpfförmigen Abschnitt 26 über, dessen durchmessergeringeres Ende eine Gasaustrittsöffnung 27 umgrenzt.

An das durchmessergeringere Ende des kegelstumpfförmigen Abschnittes 26 schließt sich ein radialer Flansch 30 an, dessen in der Darstellung von Fig. 1 obere Ringfläche 32 in einer Radialebene bezüglich der Zylinderachse der zylindrischen Wand 22 verläuft.

Um das äußere Ende des Flansches 30 ist ein sich axial erstreckender Ringabschnitt 34 vorgesehen, dessen Außendurchmesser 38 geringer ist als der Außendurchmesser 36 der zylindrischen Wand 22.

Die Länge des Gasbehälters 20 beträgt etwa 8 cm, der Durchmesser etwa 3 cm, die Wandstärke beträgt etwa 1,4 mm. Der Durchmesser 29 der Gasaustrittsöffnung 27 beträgt etwa 2 cm. Das Material des Gasbehälters ist eine Metallegierung.

Der Gasbehälter 20 ist mit einer galvanischen Korrosionsschutzschicht überzogen.

In Fig. 2 ist der Gasbehälter als Rohling 39 dargestellt, und zwar im Bereich dessen offenen Endes, daraus ist zu entnehmen, daß dieses Ende zunächst etwa zylindrisch ist.

Nach der Formgebung, wie sie in Fig. 1 dargestellt ist, bildet somit ein gewisser Abschnitt 43 der vormals Innenseite 23 des Rohlings 39 nunmehr die Ringfläche 32.

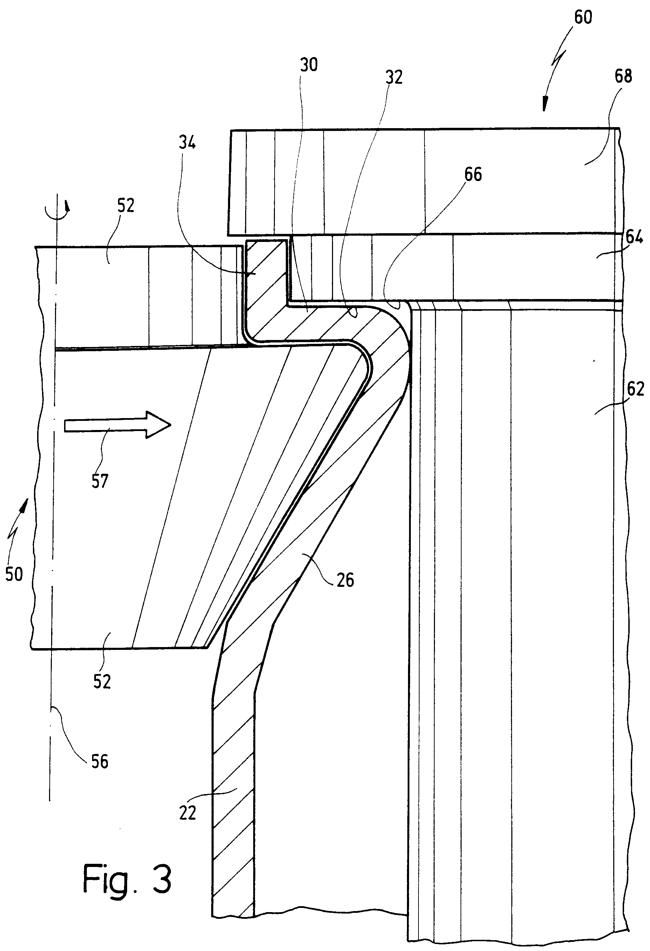

In Fig. 3 ist in stark vergrößertem Maßstab dargestellt, wie gerade der endfertige Verformungszustand des Gasbehälters 20 von Fig. 1 hergestellt wird.

Dazu ist in das Innere des Gasbehälterrohlings ein Dorn 60 eingeschoben, dessen innenliegender zylindrischer Abschnitt 62 einen Außendurchmesser aufweist, der in etwa dem lichten Innendurchmesser 29 der Gasaustrittsöffnung 27 entspricht.

Der innere zylindrische Abschnitt 62 geht über eine etwa rechtwinklige Schulter in einen mittleren zylindrischen Abschnitt 64 über, dessen Außendurchmesser dem lichten Innendurchmesser des axialen Ringabschnittes 34 entspricht.

Die axiale Länge des mittleren Abschnittes 64 entspricht etwa der axialen Länge des axialen Ringabschnittes 34.

Der Dorn 60 geht dann bodenseitig in einen noch durchmessergrößeren äußeren Abschnitt 68 über, der dann mit entsprechenden Halterungen, die hier der Übersichtlichkeit halber nicht gezeichnet sind, verbunden ist.

Von der Außenseite wird in radialer Richtung, wie dies durch einen Pfeil 57 angedeutet ist, eine Rolle 50 herangeführt.

Die Rolle 50 weist einen kegelstumpfförmigen Abschnitt 52 auf, der dem kegelstumpfförmigen Abschnitt 26 des Behälters entspricht.

Der kegelstumpfförmige Abschnitt 52 geht an dessen durchmessergrößerer Basis in einen durchmessergeringeren zylindrischen Abschnitt 52 über, dessen Außendurchmesser so gewählt ist, daß er beim Eindrücken den axialen Ringabschnitt 34 mit dem etwas geringeren Durchmesser 38 gegenüber dem Außendurchmesser 36 der zylindrischen Wand 22 bildet.

Die Rolle 50 dreht sich dabei um eine Achse 56, die parallel zur Achse der zylindrischen Wand 22 verläuft.

Es kann entnommen werden, daß beim radialen Heranfahren der Rolle 50, wie dies in Fig. 3 durch den Pfeil 57 dargestellt ist, eine Einbuchtung 28 (siehe Fig. 1) nach innen eingezogen wird, wobei der zuvor erwähnte Abschnitt 43 der ehemals zylindrischen Wand 42 zu dem sich radial erstreckenden Flansch 30 umgeformt wird. Im Bereich der dadurch entstehenden axialen Ringfläche 32 findet kein eigentlicher Materialfluß statt, so daß, in dem dargestellten Ausführungsbeispiel, eine exakt planebene Ringfläche 32 entsteht, die keinerlei Nachbearbeitung bedarf.

Durch die Auswahl der Form der Rolle 50 kann dann eine entsprechende breite Ringfläche 32 bereitgestellt werden, so daß eine ausreichende Fläche zum Verschweißen mit einem Verschlußdeckel zur Verfügung steht, wie das nachfolgend noch erläutert wird.

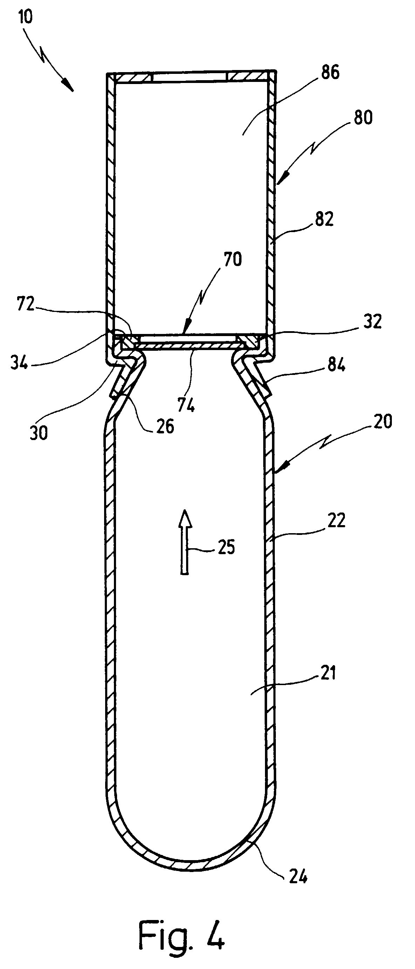

Dazu wird auf die Fig. 4 verwiesen, aus der ersichtlich ist, daß nunmehr die Ringfläche 32 mit einem Verschlußdeckel 70 verschweißt ist.

Der Verschlußdeckel 70 besteht aus einem Membranhaltering 72, der passend einerseits auf der sich in einer Radialebene erstreckenden Ringfläche 32 bzw. auf der sich axial erstreckenden inneren Ringfläche des axialen Ringabschnittes 34 sitzt und mit diesen Flächen verschweißt ist.

Mittig hält der Membranhaltering 72 eine Metallmembran 74 gefangen, die, nachdem der Gasbehälter 20 mit einem Gas 21 gefüllt wird und nach dem Verschweißen mit dem Verschlußdeckel 70, nach außen etwa kalottenförmig auswölbt.

Das Gas 21 ist bspw. ein unter einem Druck von 300 bar stehendes Argon.

Nach dem Befüllen und dem Verschweißen mit dem Verschlußdeckel 70 wird anschließend ein weiteres Bauteil 80 am Gasbehälter 20 montiert, nämlich ein Filterrohr 82, dessen Umfang mit zahlreichen Filterrohröffnungen versehen ist.

Dazu ist ein unterer Endbereich des Filterrohres 82 zunächst zylindrisch, dessen Innendurchmesser entspricht dem Außendurchmesser des axialen Ringabschnittes 34. Dadurch wird das Filterrohr 82 beim Aufschieben auf den Gasbehälter 20 exakt zentriert geführt.

Der Endbereich wird dann in die Einbuchtung 28 eingezogen, dabei wird ein Bereich um die untere bzw. äußere Seite des Flansches 30 gebördelt und gleichzeitig wird ein Endabschnitt 84 um den kegelstumpfförmigen Abschnitt 26 gelegt.

Dadurch ist dann das Filterrohr 82 unverlierbar, ebenfalls über einen Umformungsvorgang, am Gasbehälter 20 befestigt.

Im Innern des Filterrohres 82 ist eine Brennkammer 86 vorgesehen, in deren Innern ein Brennsatz vorhanden ist. Der hier nicht dargestellte Brennsatz dient dazu, im Auslösefall die Membran 74 durchzubrennen, so daß dann das Gas 21 schlagartig aus dem Behälter 20 über das Filterrohr 82 und dessen Filterrohröffnungen in einen Sack eines Airbags (der hier aus Übersichtlichkeitsgründen nicht dargestellt ist) entweichen kann und diesen aufbläht.

Der in Fig. 4 gezeigte endfertige Gasgenerator 10 entwickelt ein sogenanntes Kaltgas, ein sich entspannendes, vorher komprimiertes Gas, die Filterrohröffnungen dienen dazu, Brennrückstände des Brennkammersatzes herauszufiltern.

Aus Fig. 4 ist ersichtlich, daß der Außendurchmesser des Filterrohres 82 dem Außendurchmesser der zylindrischen Wand 22 entspricht, so daß ein etwa durchgehend zylindrischer Körper gleichen Außendurchmessers des Gasgenerators 10 vorliegt. Demzufolge wird beim Einziehvorgang der Durchmesser des axialen Ringabschnitts 34 soweit verringert, daß die Differenz zum Außendurchmesser 22 genau der Materialstärke des Filterrohres 82 entspricht.

## Patentansprüche

1. Gasgenerator für einen Airbag, mit einem Gasbehälter (20) zur Aufnahme eines unter hohem Druck stehenden Gases (21), wobei der Gasbehälter (20) im Bereich einer Gasaustrittsöffnung (27) eine Ringfläche (32) aufweist, an der ein Verschlußdeckel (70) anschweißbar ist, und wobei der Gasbehälter (20) formschlüssig und unverlierbar mit einem weiteren Bauteil (80) verbindbar ist, dadurch gekennzeichnet, daß die Ringfläche (32) durch die Innenseite (23) eines über zumindest einen Umformvorgang, ohne spanabhebende Bearbeitung, umgebogenen Abschnittes (43) der Wand (22) des Gasbehälters (20) gebildet wird.

2. Gasgenerator nach Anspruch 1, dadurch gekennzeichnet, daß die Ringfläche (32) als eine Seite eines die Gasaustrittsöffnung (27) umrundenden radialen Flansches (30) ausgebildet ist.

3. Gasgenerator nach Anspruch 1 oder 2, dadurch gekennzeichnet, daß die radiale Außenkontur des Gasbehälters (20) im Bereich der Ringfläche (32), radial weiter innen liegt als die Außenkontur des verbleibenden Gasbehälterkörpers.

4. Gasgenerator nach einem der Ansprüche 1 bis 3, dadurch gekennzeichnet, daß, in Ausströmrichtung (25) des Gases (21) gesehen, hinter der Ringfläche (32) unmittelbar anschließend eine Einbuchtung (28) vorgesehen ist.

5. Gasgenerator nach einem der Ansprüche 1 bis 4, dadurch gekennzeichnet, daß der Gasbehälter (20) eine zylindrische Wand (22) aufweist, die im Bereich der Gasaustrittsöffnung (27) eine kegelstumpfförmige Einbuchtung (28) aufweist, wobei am durchmessergeringen Ende des Kegelstumpfabschnittes (26) ein radialer Flansch (30) vorgesehen ist, dessen eine äußere Ringfläche (32) zum Anschweißen des Verschlußdeckels (70) dient.

6. Gasgenerator nach einem der Ansprüche 1 bis 5, dadurch gekennzeichnet, daß ein die Ringfläche (32) umrundender, sich in Ausströmrichtung (25) des Gases (21) forterstreckender axialer Ringabschnitt (34) vorgesehen ist.

7. Gasgenerator nach Anspruch 6, dadurch gekennzeichnet, daß der Außendurchmesser (38) des Ringabschnittes (34) geringer ist als der Außendurchmesser (36) des Gasbehälters (20).

8. Gasgenerator nach einem der Ansprüche 5 bis 7, dadurch gekennzeichnet, daß die kegelstumpfförmige Einbuchtung (28), der radiale Flansch (30) mit der Ringfläche (32) und der axiale Ringabschnitt (34) jeweils unmittelbar ineinander übergehen und über einen bzw. mehrere gemeinsame Umformvorgänge ausgebildet worden sind.

9. Verfahren zum Herstellen eines einen Gasbehälter (20) aufweisenden Gasgenerators (10) für einen Airbag, wobei am Gasbehälter (20) im Bereich der Gasaustrittsöffnung (27) eine Ringfläche (32) ausgebildet wird, an der ein Verschlußdeckel (70) anschweißbar ist, und wobei der Gasbehälter (20) formschlüssig und unverlierbar mit einem weiteren Bauteil (80) des Gasgenerators (10) verbindbar ist, dadurch gekennzeichnet, daß ein Abschnitt (43) der Wand (22) des Gasbehälters (20) durch zumindest einen Umformvorgang, ohne spanabhebende Bearbeitung, umgebogen wird und daß dadurch die Ringfläche (32) ausgebildet wird.

10. Verfahren nach Anspruch 9, dadurch gekennzeichnet, daß in die Wand (22) des Gasbehälters (20) von der Außenseite her über einen einziehenden Rolliervorgang der Abschnitt (43) zur Ausbildung der Ringfläche (32) umgebogen wird.

11. Verfahren nach Anspruch 10, dadurch gekennzeichnet, daß der Abschnitt (43) zu einem radialen Flansch (30) umgebogen wird.

12. Verfahren nach Anspruch 10 oder 11, dadurch gekennzeichnet, daß so eingezogen wird, daß die radiale Außenkontur der Ringfläche (32) gegenüber der Außenkontur des Behälters (24) radial weiter innen zum Liegen kommt.

13. Verfahren nach einem der Ansprüche 10 bis 12, dadurch gekennzeichnet, daß der Einziehvorgang derart durchgeführt wird, daß im Bereich der Gasaustrittsöffnung (27) ein sich zu dieser hin konisch verjüngender Abschnitt (26) eingezogen wird, wobei auch der radiale Flansch (30) ausgebildet wird.

14. Verfahren nach einem der Ansprüche 9 bis 13, dadurch gekennzeichnet, daß ausgehend von einem im Bereich der Gasaustrittsöffnung (27) hohlzylindrischen Rohling (39), in einem solchen Abstand von dieser ein einziehender Rolliervorgang durchgeführt wird, daß im Bereich der Gasaustrittsöffnung (27) ein sich axial erstreckender Ringabschnitt (34) stehen bleibt.

15. Verfahren nach Anspruch 14, dadurch gekennzeichnet, daß der sich axial erstreckende Ringabschnitt (34) zu einem gegenüber dem Außendurchmesser (36) des Gasbehälters (20) durchmessergeringeren (38) Ringabschnitt (34) umgeformt wird.

16. Verfahren nach einem der Ansprüche 13 bis 15, dadurch gekennzeichnet, daß die kegelstumpfförmige Einbuchtung (28), der radiale Flansch (30) mit der Ringfläche (32) und der axiale Ringabschnitt (34) gemeinsam ausgeformt werden.

17. Verfahren nach einem der Ansprüche 9 bis 16, dadurch gekennzeichnet, daß der Gasbehälter (20) vor den Umformvorgängen mit einer oberflächlichen Korrosionsschutzschicht versehen wird.

18. Verfahren nach einem der Ansprüche 9 bis 17, dadurch gekennzeichnet, daß nach Formen des Gasbehälters (20) der Verschlußdeckel (70) an die Ringfläche (32) angeschweißt wird, daß anschließend ein Filterrohr (82) über den Bereich mit der Einbuchtung (28) geschoben wird, und daß ein Endbereich (84) des Filterrohres (82) um die Hinterschneidung des Flansches (30) und an die Außenseite des kegelstumpfförmigen Abschnittes (26) gebördelt wird.
